# EUROPEAN PATENT APPLICATION

(11) **EP 3 192 354 A1**
(43) Date of publication of application: **19.07.2017**
(21) Application number: 16425001.1
(22) Date of filing: 18.01.2016
(51) Int. Cl.: A01G 9/02

(54) **IMPROVED CONTAINER FOR PLANTS**

(71) Applicant: Di Marco, Fabrizio, 64100 Teramo (TE) (IT); Vidal Sanchez, Ignasi, 46680 Algemesi Valencia (ES)
(72) Inventor: Di Marco, Fabrizio, 64100 Teramo (TE) (IT)
(74) Representative: Baldi, Claudio

(57) **Abstract**

A container (100) is disclosed, which is intended to contain the soil for growing plants and root plants; said container (100) comprising a lateral wall (1) comprising a plurality of outward-extending protuberances (2) having a truncated pyramid shape with rectangular base, and provided with openings (20) shaped as a rectangle or an elongated slot to make it easier for the plant roots to come out of the container (100).

## Description

The present patent application for industrial invention relates to an improved container for plants.

Containers used to contain the soil for growing plants and plant roots are known.

WO2013072497 discloses a container for plants intended to contain soil for growing plans and plant roots. Said container comprises a lateral wall obtained from a folded sheet of flexible material. Said lateral wall comprises a plurality of hollow protuberances that extend towards the outside of the container. Each hollow protuberance is shaped as a truncated pyramid with square base and is provided with a square or circular opening to let the plant roots come out of the container. However, said openings have small dimensions that make it difficult for the roots to come out of the container.

The sheet used for the lateral wall of the container comprises a plurality of diverting elements with elongated shape that extend towards the inside of the container in order to divert the plant roots towards the hollow protuberances. However, the diverting elements prevent the correct homogeneous watering of the soil near the lateral wall of the container. Moreover, the diverting elements increase the time needed by the roots to come out of the container because the roots bounce back against the diverting elements before coming out of the container.

The purpose of the present invention is to overcome the drawbacks of the prior art by disclosing a container for plants that is versatile and capable of helping the roots to come out of the container.

The container of the invention comprises a lateral wall that laterally defines a compartment intended to contain the soil for growing plants and plant roots. Said lateral wall comprises a plurality of outward-extending protuberances. Each protuberance of the lateral wall is internally hollow and has a cavity with an opening to let the roots come out of the container. Each protuberance of the lateral wall is shaped as a truncated pyramid with rectangular base, and the opening of each protuberance is shaped as a rectangle or an elongated slot to help the plant roots to come out of the container.

The advantages of the container of the invention are evident, wherein the large slot-shaped protuberances of the lateral wall make it easier for the plant roots to come out of the container and reduce the time needed by the roots to come out of the container.

For purpose of clarity the description of the container according to the invention continues with reference to the attached drawings, which are intended for purposes of illustration only, and not in a limiting sense, wherein:
Fig. 1 is an axonometric view of a lateral wall of the container according to the invention;
Fig. 2 is an axonometric view of the container according to the invention;
Fig. 3 is an axonometric view of a protuberance of the lateral wall of Fig. 1;
Fig. 4 is a perspective view similar to Fig. 3, which shows the protuberance from a different angle;
Fig. 5 is an axonometric view of a bottom wall of the container according to the invention;
Figs. 6 to 11 are top views that show the assembly steps of the container according to the invention;
Fig. 12 is an axonometric view of the container according to the invention, wherein a portion of the lateral wall of the container has been. removed.

With reference to the attached figures, the container (100) of the invention is disclosed, it being intended to contain the soil for growing plants and plant roots.

The container (100) comprises a lateral wall (1) that laterally defines a compartment (V) intended to contain the soil for growing plants and plant roots. The lateral wall (1) comprises a plurality of protuberances (2) that extend towards the outside of the container (100). The protuberances (2) are arranged along vertical rows, in such manner that vertical grooves (10) are defined between the protuberances (2) of adjacent rows, said vertical grooves (10) acting as folding lines for the lateral wall (1).

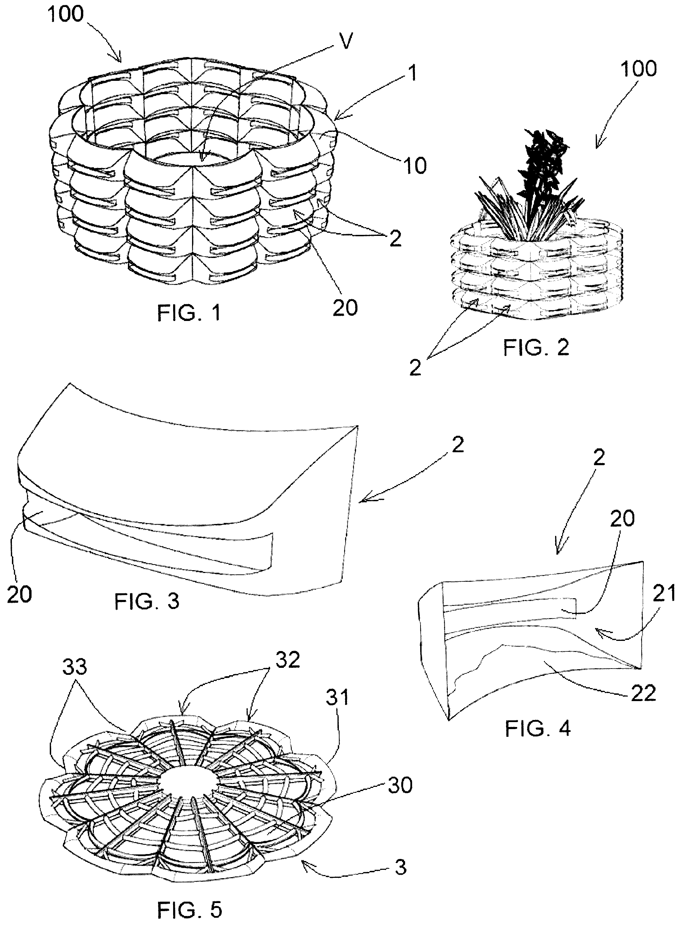

As shown in Figs. 3 and 4, each protuberance (2) of the lateral wall(1) of the container has a truncated pyramid shape with rectangular base, with outward-decreasing dimensions. The major side of the base of each protuberance is at least double than the minor side of the base.

Each protuberance (2) is internally hollow and comprises a cavity (21). Advantageously, the cavity (21) of each protuberance has a capacity from 50 cl to 60 cl, preferably 55 cl. The cavity (21) of each protuberance (2) is defined by a lower wall (22) that is tilted downwards, going towards the inside of the container. In view of the above, the water accumulated inside the cavity (21) of each protuberance (2) tends to flow towards the inside of the container, thus preventing any water stagnation that may rot the roots that pass through the cavity (21).

An opening (20) is obtained on the minor base of each protuberance (2) to let the roots come out of the container (100). The opening (20) is shaped as a rectangle or a slot with the major side having a length at least seven times longer than the minor side. Advantageously, the major side of the opening (20) of each protuberance (2) has a length comprised between 55 mm and 65 mm, preferably 60 mm, and the minor side of the opening (20) of each protuberance (2) has a length comprised between 7 mm and 9 mm, preferably 8 mm. The cavity (21) of each protuberance (2) of the lateral wall (1) has a tapered shape towards the outside of the container (100) in such manner to direct the plant roots from the container (100) towards the opening (20) of the protuberance (2) and allow the roots to come out of the container (100), as shown in Fig. 2.

Each protuberance may have a smooth external surface or, alternatively, an external surface with ribs and grooves or projections and cavities to improve the impact resistance of the container (100).

Referring to Fig. 5, the container (100) advantageously comprises a bottom wall (3) that defines the bottom of the compartment (V) of the container. The bottom wall (3) comprises a plurality of holes (30) in order to drain water. The bottom wall (3) of the container comprises a perimeter border (31) comprising a plurality of projections (32) and a plurality of grooves (33) arranged between the projections (32).

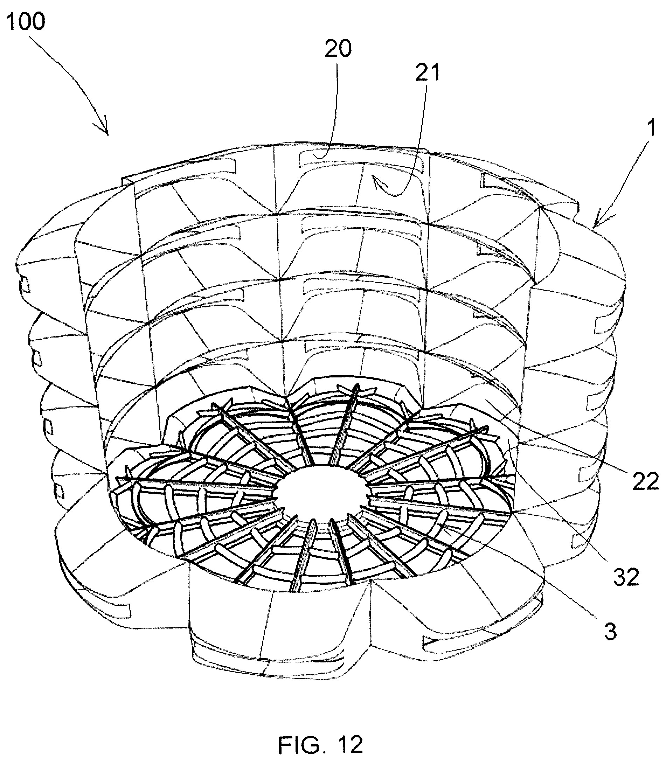

Referring to Fig. 12, each projection (32) of the perimeter border (31) of the base wall (3) of the container has a profile suitable for being coupled inside the cavity (21) of one of the protuberances (2) of the lateral wall (1) of the container (100) in such manner that each projection (32) of the perimeter border (31) of the bottom base (3) of the container is positioned inside the cavity (21) of a protuberance (2) of the lateral wall (1), above the lower wall (22) that defines the cavity (21) of the protuberance (2).

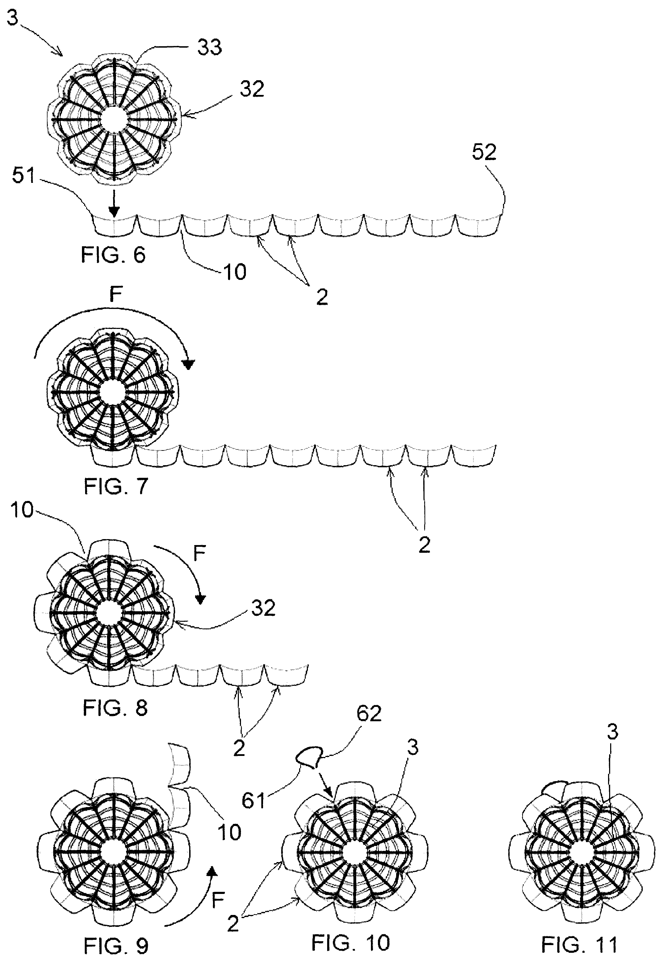

With reference to Figs. 6 to 11, the lateral wall (1) of the container is advantageously obtained by folding a sheet of flexible material. The sheet that forms the lateral wall (1) of the container (100) is folded along the vertical grooves (10) in such manner to obtain the desired shape.

In particular, a projection (32) of the perimeter border (31) of the bottom wall (3) of the container is positioned inside the cavity (21) of a protuberance (2) of said sheet, in such manner that the bottom wall (3) is attached to the sheet.

The base wall (3) is rotated towards the direction indicated by the arrow (F) in such manner that each projection (32) of the perimeter border (31) of the bottom wall (3) is housed inside the cavity (21) of one of the protuberances (2) of the sheet.

When the sheet is folded, two edges (51, 52) of the sheet are disposed in mutual contact and are fixed by means of fixing means (6) disposed inside the openings (20) of the protuberances (2) near the edges (51, 52) of the sheet, in such manner to keep the sheet closed. Advantageously, the fixing means (6) comprise clips that are engaged in the openings (20) of the protuberances (2) near the edges (51, 52) of the sheet. Each clip comprises a first end (61) intended to be inserted inside the opening (20) of one of the protuberances (2) near a first edge (51) of the sheet and a second end (62) intended to be inserted inside the opening (20) of one of the protuberances near a second edge (52) of the sheet, as shown in Fig. 10.

Advantageously, said sheet is made of high-density polyethylene, in such manner to have a high resistance to impacts and torsion. Alternatively, the sheet used to form the lateral wall (1) of the container (100) can be made of a thermoformable textile material, such as for example non-woven fabric (TNT) to increase the transpiration of the lateral wall (1) or of a biodegradable material, such as cardboard or vegetal fibers.

## Claims

1. Container (100) intended to contain the soil to grow plants and plant roots; said container (100) comprising a lateral wall (1) that laterally defines a compartment (V) intended to contain the soil to grow plants and plant roots; said lateral wall (1) comprising a plurality of outward-extending protuberances (2); each protuberance (2) being internally hollow and having a cavity (21) with an opening (20) to let the roots come out of the container (100),
**characterized in that**
each protuberance (2) of said lateral wall (1) is shaped as a truncated pyramid with rectangular base, and
the opening (20) of each protuberance (2) of said lateral wall (1) is shaped as a rectangle or an elongated slot to make it easier for the plant roots to come out of the container (100).

2. The container (100) of claim 1, wherein the cavity (21) of each protuberance (2) of the lateral wall (1) has a tapered shape with decreasing dimensions towards the outside of the container (100) in such manner to direct the plant roots from the container (100) towards the opening (20) of the protuberance (2).

3. The container (100) of claim 1 or 2, wherein the opening (20) of each protuberance (2) has a major side at least seven times longer than the minor side.

4. The container (100) of claim 3, wherein the major side of the opening (20) of each protuberance (2) has a length comprised between 55 mm and 65 mm and the minor side of the opening (20) of each protuberance (2) has a length comprised between 7 mm and 9 mm.

5. The container (100) of any one of the preceding claims, wherein the cavity (21) of each protuberance (2) has a lower wall (22) that is inclined downwards from the outside to the inside of the container.

6. The container (100) of any one of the preceding claims, wherein the cavity (21) of each protuberance (2) has a capacity comprised between 50 cl and 60 cl.

7. The container (100) of any one of the preceding claims, comprising a bottom wall (3) that defines the compartment (V) on the bottom and is provided with a plurality of holes (30) in order to drain water.

8. The container (100) of claim 7, wherein said bottom wall (3) comprises a perimeter border (31) comprising a plurality of projections (32) and a plurality of grooves (33) disposed between the projections (32).

9. The container (100) of claim 8, wherein each projection (32) of the perimeter border (31) of the bottom wall (3) is coupled inside the cavity (21) of one of the protuberances (2) disposed in lower position in the lateral wall (1) of the container (100).

10. The container (100) of any one of the preceding claims, wherein said lateral wall (1) is obtained by folding a flexible sheet.

11. The container (100) of claim 10, wherein said protuberances (2) are disposed in vertical rows in such manner to generate vertical grooves (10) between the protuberances (2) of adjacent rows; said sheet being folded along said vertical grooves (10) that act as folding lines.

12. The container (100) of claim 10 or 11, wherein said sheet comprises two edges (51, 52) intended to be disposed in contact when the sheet is closed to form the lateral wall (1) of the container, wherein said container comprises fixing means (6) intended to engage in the openings (20) of the protuberances (2) near the edges (51, 52) of the sheet to hold the sheet closed.

13. The container (100) of claim 12, wherein said fixing means (6) comprise a clip having a first end (61) intended to be inserted into the opening (20) of one of the protuberances (2) near a first edge (51) of the sheet and a second end (62) intended to be inserted into the opening (20) of one of the protuberances (2) near a second edge (52) of the sheet.

14. The container (100) of any one of claims 10 to 13, wherein said sheet forming the lateral wall (1) is made of high-density polyethylene.
